(19) **Europäisches Patentamt / European Patent Office / Office européen des brevets**

(11) **EP 3 346 632 B1**

(12) **FASCICULE DE BREVET EUROPEEN**

(45) Date de publication et mention de la délivrance du brevet:
**15.05.2019 Bulletin 2019/20**

(51) Int Cl.:
***H04L 9/06*** *(2006.01)*

(21) Numéro de dépôt: **18305016.0**

(22) Date de dépôt: **10.01.2018**

(54) **PROCÉDÉ DE CHIFFREMENT OU DE DÉCHIFFREMENT D'UN N-UPLET DE DONNÉES AVEC UN N-UPLET DE CLÉS SECRÈTES PRÉDÉTERMINÉES**

CHIFFRIER- ODER DECHIFFRIERVERFAHREN EINES DATEN-TUPELS MIT EINEM TUPEL VORBESTIMMTER GEHEIMER SCHLÜSSEL

METHOD FOR ENCRYPTING OR DECRYPTING AN N-TUPLE OF DATA WITH AN N-TUPLE OF PREDETERMINED SECRET KEYS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.01.2017 FR 1750215**

(43) Date de publication de la demande:
**11.07.2018 Bulletin 2018/28**

(73) Titulaire: **Idemia Identity & Security France 92400 Courbevoie (FR)**

(72) Inventeurs:
• PROUFF, Emmanuel
  **92130 ISSY LES MOULINEAUX (FR)**
• LESCUYER DE CHAPTAL-LAMURE, Roch, Olivier
  **92130 ISSY LES MOULINEAUX (FR)**

• SERVANT, Victor
  **92130 ISSY LES MOULINEAUX (FR)**

(74) Mandataire: **Regimbeau 20, rue de Chazelles 75847 Paris Cedex 17 (FR)**

(56) Documents cités:
  **US-A1- 2010 299 515    US-A1- 2012 045 050**

• CHOW S ET AL: "Selected Areas in Cryptography, White-Box Cryptography and an AES Implementation", SELECTED AREAS IN CRYPTOGRAPHY : 9TH ANNUAL INTERNATIONAL WORKSHOP ; REVISED PAPERS / SAC 2002, ST. JOHN'S, NEWFOUNDLAND, CANADA, AUGUST 15 - 16, 2002; [LECTURE NOTES IN COMPUTER SCIENCE ; 2595], SPRINGER VERLAG, BERLIN (DE), vol. 2595, 15 août 2002 (2002-08-15), pages 250-270, XP002587883, ISBN: 978-3-540-00622-0

**Description**

DOMAINE TECHNIQUE GENERAL

La présente invention concerne le domaine de la cryptographie, et en particulier un procédé de chiffrement/déchiffrement de type « boite blanche ».

ETAT DE L'ART

Une fonction est considérée comme une « boîte noire » lorsqu'on ne peut pas accéder à son fonctionnement interne, i.e. qu'on peut connaître ses entrées et ses sorties mais pas ses paramètres secrets ou ses états intermédiaire.

Les algorithmes cryptographiques (par exemple pour du chiffrement ou de la signature) sont ainsi classiquement supposés des boites noires lorsqu'on évalue leur fiabilité (résistance aux attaques).

Par exemple, si l'on prend les algorithmes cryptographiques typiques tels que DES (« Data Encryption Standard ») ou AES (« Advanced Encryption Standard »), ceux-ci travaillent sur des blocs d'un taille 64 ou 128 bit (et demain 256 bit), mais ne peuvent en une seule opération traiter un tel bloc (il y a déjà plus de $10^{19}$ valeurs possibles de blocs de 64 bit). Il est ainsi nécessaire de travailler au sein d'un bloc sur des éléments plus petits, typiquement de taille 8 bit (seulement 256 possibilités) en enchainant des opérations non-linéaires (bijectives) avec des opérations linéaires (non injectives).

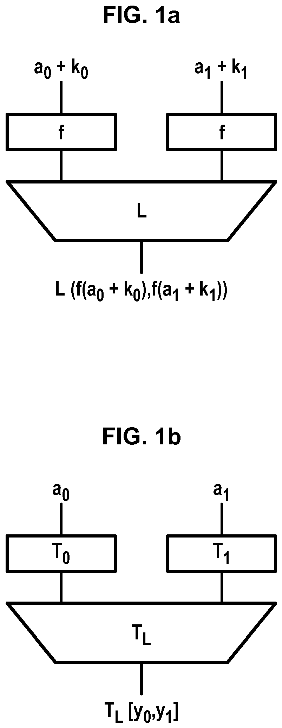

En référence à la **figure 1a** ces algorithmes peuvent s'illustrer de manière très simplifiée par la formule $a_0$, $a_1 \rightarrow L(f(a_0 + k_0), f(a_1 + k_1))$, où f désigne une opération non-linéaire par exemple sur 8 bits, L désigne une fonction linéaire (par exemple un XOR, « OU exclusif ») transformant dans l'exemple deux mots de 8 bits d'un bloc en un mot de 8 bits, $a_0$ et $a_1$ sont des octets de texte à chiffrer et $k_0$ et $k_1$ sont des données secrètes (les « clés » de l'algorithme). Ladite formule est appliquée itérativement de sorte à traiter tout le bloc.

L'hypothèse de boite noire suppose dans ce cas que les données $k_0$ et $k_1$ ou les états intermédiaires $f(a_0 + k_0)$ et $f(a_1 + k_1)$ sont inaccessibles.

Cette hypothèse impose une contrainte forte sur le stockage et la manipulation de ces paramètres. Cependant des outils ont été récemment publiés pour permettre l'automatisation d'attaques sur implémentation matérielle, attaques dites par canaux auxiliaires ou par fautes.

Aujourd'hui, pour de nombreux cas d'usages incluant le paiement sur mobile, il est nécessaire de déployer des algorithmes cryptographiques en faisant le moins d'hypothèses possibles sur la sécurité du matériel cible. Le stockage et la manipulation sécurisés des paramètres secrets doivent alors être assurés au niveau applicatif.

La cryptographie dite boite blanche vise à répondre à ce défi en proposant des implémentations des algorithmes cryptographiques qui sont sensés rendre l'extraction des secrets impossible, même en cas d'attaque permettant à l'attaquant un accès complet à l'implémentation logicielle de l'algorithme. Plus précisément, une fonction est considérée comme une « boîte blanche » lorsque ses mécanismes sont visibles et permettent d'en comprendre le fonctionnement. En d'autres termes, on fait directement l'hypothèse que l'attaquant a accès à tout ce qu'il souhaite (le binaire est complètement visible et modifiable par l'attaquant et celui-ci a le plein contrôle de la plateforme d'exécution). Par conséquent, l'implémentation elle-même est la seule ligne de défense.

Pour protéger l'implantation d'un schéma tel que décrit plus haut, il a d'abord été proposé de fusionner les clefs $k_0$ et $k_1$ avec la fonction f en représentant les calculs par des tables. Pour l'exemple étudié, cela revient en référence à la **figure 1b** à stocker en mémoire (e.g. ROM ou Flash) trois tables $T_0$, $T_1$ et $T_L$ représentant respectivement les fonctions $a_0 \rightarrow T_0[a_0] = f(\alpha_0 + k_0)$, $a_1 \rightarrow T_1[a_1] = f(a_1 + k_1)$ et $(y_0, y_1) \rightarrow T_L[y_0, y_1] = L(y_0, y_1) = z$.

Cette astuce permet d'éviter d'avoir les clés en clair, mais ne suffit pas à résister à une attaque consistant à tester exhaustivement toutes les clefs possibles $k_0$ (respectivement $k_1$) jusqu'à trouver celle qui vérifie $y_0 = f(a_0 + k_0)$ (respectivement $y_1 = f(a_1 + k_1)$).

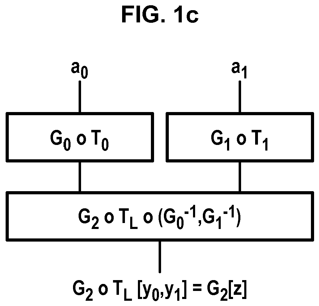

Il a alors été proposé de « masquer » les états internes par des permutations aléatoires $G_0$, $G_1$, $G_2$ (inconnues mais constantes) appelées encodages internes. Plus précisément, comme représenté par la **figure 1c,** on obtient les états internes $G_0[y_0]$ et $G_1[y_1]$, à partir desquels on ne peut retrouver les clés en testant directement toutes les possibilités.

En utilisant la fonction linéaire $G_2 \, o \, T_L \, o \, (G_0^{-1}, G_1^{-1}),$ on a bien

$$G_2 \, o \, T_L \, o \, (G_0^{-1} \, o \, G_0[y_0], G_1^{-1} \, o \, G_1[y_1]) = G_2 \circ T_L[y_0, y_1] = G_2[z].$$

Toutefois, des attaques ont montré que les schémas comme ci-dessus pouvaient encore être attaquées lorsque l'encodage était linéaire en exploitant la corrélation entre la donnée encodée et la donnée sensible (ie $y_i$ ou z dans l'exemple ci-dessus), cf l'article « Differential Computation Analysis: Hiding Your White-Box Designs is Not Enough » à CHES2016.

Ce schéma est par ailleurs sensible à d'autres attaques dites *par collisions* qui exploitent le caractère non-injectif des transformations linéaires (ici $T_L$) pour construire des relations algébriques donnant de l'information sur la clef (la paire $(k_0, k_1)$ dans l'exemple ci-dessus), cf l'article « Cryptanalysis of a White Box AES Implementation » publié à SAC2004.

Plus précisément, de faire du caractère non injectif de $T_L$ on peut trouver des couples de paires $(a_0, a_1)$ et $(a_0', a_1')$ telles que $G_2 \circ T_L[f(a_0 + k_0), f(a_1 + k_1)] = G_2 \circ T_L[(a_0' + k_0), f(a_1' + k_1)]$, i.e. $T_L[f(a_0 + k_1), f(a_1 + k_1)] = T_L[f(a_0' + k_0), f(a_1' + k_1)]$. On élimine ainsi les permutations aléatoires et si l'on a assez de couples on peut à nouveau tester exhaustivement les valeurs des clés $k_0$, $k_1$, ce qui est long mais faisable.

Il a par conséquent été proposé dans les demandes EP2924677, EP2922234 et EP2996278 un découpage des états internes en une somme de « fragments » (« splits » en anglais), de sorte à mettre en oeuvre la fonction non-linéaire fragment par fragment. On utilise pour cela une fonction linéaire de partage $D_i(y)$ permettant de fragmenter $y$, et on duplique les permutations aléatoires en $G_{00}, G_{10}, G_{L0}, G_{01}, G_{11}, G_{L1}$ correspondant à l'un ou l'autre des fragments.

Toutefois, ce schéma reste sensible à certaines attaques, en particulier par collision : en posant pour que les calculs soient plus simples que $T_L$ est la fonction OU exclusif, « XOR », ce qui n'enlève rien à la généralité de l'idée car toute fonction linéaire peut se décomposer en une succession de XORs et de produits scalaires avec des constantes, si pour $z$ donné, on construit l'ensemble $\mathcal{P}_z$ des paires $(x_0, x_1)$ telles que $z = G_{L0} \circ (D_0(y_0) + D_1(y_1))$, alors pour chaque paire $(x_0, x_1) \in \mathcal{P}_z$ on peut poser $D_0(y_0) + c_z = D_1(y_1)$, i.e. $y_1 = D_1^{-1}(D_0(y_0) + c_z)$.

Cela permet de construire la fonction $\varphi_{\hat{k}_0, \hat{k}_1} : \hat{y}_0 \to \hat{y}_1$ (où $\hat{y}_0, \hat{y}_1$ sont les paires associées à tous les $(x_0, x_1) \in \mathcal{P}_z$, pour toute paire de clés $\hat{k}_0, \hat{k}_1$), dont on peut montrer que le cas $(\hat{k}_0, \hat{k}_1) = (k_0, k_1)$ est distinguable, ce qui permet de remonter aux clés. En effet, dans le bon cas, la fonction $\varphi_{\hat{k}_0, \hat{k}_1}$ est une fonction linéaire (ou affine) alors qu'elle ne l'est pas lorsque $(\hat{k}_0, \hat{k}_1) \neq (k_0, k_1)$.

De plus, la demande de brevet US 2012/0045050 par Farrugia et al. expose une amélioration d'un algorithme de chiffrement du type AES dans un modèle à boîte blanche.

L'article "White-Box Cryptography and an AES Implementation" par Chow et al. expose un arrière-plan général de la cryptographie à boîte blanche, en particulier dans la cadre d'une implémentation AES.

La demande de brevet US 2010/299515 par Michiels et al. expose le tracement des copies d'une implémentation sur ordinateur d'un procédé.

Il serait par conséquent souhaitable de disposer d'une nouvelle solution de chiffrement « boite blanche » utilisant les mécanismes standards comme le DES et l'AES qui soit complètement résistante à toutes attaques connues (par analyse de canaux, par collision etc.).

PRESENTATION DE L'INVENTION

Selon un premier aspect, la présente invention concerne un procédé de chiffrement ou de déchiffrement d'un n-uplet de données avec un n-uplet de clés secrètes prédéterminées, $n \geq 2$, pour une fonction non-linéaire de permutation et une fonction linéaire de multiplexage données, le procédé étant caractérisé en ce qu'il comprend la mise en oeuvre par des moyens de traitement de données d'un équipement d'étapes de :

(a) Pour chaque élément dudit n-uplet de données, détermination de $m > n$ premiers états internes par application audit élément de premières opérations, chacune étant :

- représentée par une table stockée sur des moyens de stockage de données de l'équipement, et
- définie comme la combinaison d'un encodage interne bijectif unique, d'une fonction de partage non-linéaire, et de la fonction non-linéaire de permutation paramétrée avec la clé secrète correspondante, lesdites fonctions de partage non-linéaires formant $m$ collections telle que les $n$ fonctions d'une collection partagent toute donnée d'entrée en $n$ fragments dont la somme est égale à la donnée d'entrée ;

l'ensemble desdits premiers états internes déterminés pour tous lesdits éléments formant n-uplets d'états internes ;
(b) Pour chaque n-uplet de premiers états internes, détermination d'un deuxième état interne par application auxdits états internes du n-uplet de premiers états internes d'une deuxième opération étant :

- représentée par une table stockée sur les moyens de stockage de données de l'équipement, et
- définie comme la combinaison d'un deuxième encodage interne bijectif unique, de la fonction linéaire de multiplexage, et des inverses desdits premiers encodages internes bijectifs.

Selon d'autres caractéristiques avantageuses et non limitatives :

- $\forall i \in [\![0,n - 1]\!]$, $y_{i0} = T_{i0}[a_i] = G_{i0} \circ D_i \circ f(a_i + k_i)$, $y_{i1} = T_{i1}[a_i] = G_{i1} \circ E_i \circ f(a_i + k_i)$, $y_{i2} = T_{i2}[a_i] = G_{i2} \circ F_i \circ f(a_i + k_i)$, etc. ;
- $z_j = T_{Lj}[y_{0j}, y_{1j} \dots ] = G_{Lj} \circ L(G_{0j}^{-1}[y_{0j}], G_{1j}^{-1}[y_{1j}]\dots)$;
- $\forall i \in [\![0,n - 1]\!]$, $\forall x$, $x = D_i(x) + E_i(x) + F_i(x) + \dots$ ;
- Le procédé comprend une étape préalable (a0) de génération aléatoire par des moyens de traitement de données d'un serveur connecté à l'équipement de $m - 1$ fonctions de partage non-linéaires pour chaque collection, à partir desquelles la m-ième fonction de partage non-linéaire est construite ;
- l'étape (a0) comprend en outre la génération aléatoire des encodages internes, la construction des tables, et leur transmission à l'équipement pour stockage sur les moyens de stockage ;
- la répétition des étapes (a) et (b) de sorte à chiffrer ou déchiffrer un ensemble de données comprenant celles dudit n-uplet ;
- le procédé comprend en outre une étape (c) de détermination du chiffré/déchiffré dudit n-uplet de données par application auxdits deuxièmes états internes d'une troisième opération étant :

    - représentée par une table stockée sur les moyens de stockage de données de l'équipement, et
    - définie comme la somme des inverses desdits deuxièmes encodages internes bijectifs.

- $$z = T_z \left[ \{z_j\}_{j\in[\![0,m-1]\!]} \right] = \sum_{j=0}^{m-1} G_{Lj}^{-1}[z_j] \; ;$$
- $n = 2$ ;
- ladite fonction linéaire de multiplexage est la fonction OU exclusif ;
- $m = 3$ ;
- chaque élément dudit n-uplet de données a une taille d'un octet ou d'un semioctet ;
- ladite fonction non-linéaire de permutation est celle d'un algorithme cryptographique choisi parmi DES et AES.

Selon un deuxième et un troisième aspect, l'invention propose un produit programme d'ordinateur comprenant des instructions de code pour l'exécution d'un procédé selon le premier aspect de chiffrement ou de déchiffrement d'un n-uplet de données avec un n-uplet de clés secrètes prédéterminées ; et un moyen de stockage lisible par un équipement informatique sur lequel un produit programme d'ordinateur comprend des instructions de code pour l'exécution d'un procédé selon le premier aspect de chiffrement ou de déchiffrement d'un n-uplet de données avec un n-uplet de clés secrètes prédéterminées.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- les figures 1a-1c illustrent trois algorithmes cryptographiques connus ;
- la figure 2 est un schéma d'une architecture pour la mise en oeuvre du procédé selon l'invention ;
- la figure 3 illustre un mode de réalisation d'un algorithme cryptographique conforme au procédé selon l'invention.

DESCRIPTION DETAILLEE

*Architecture*

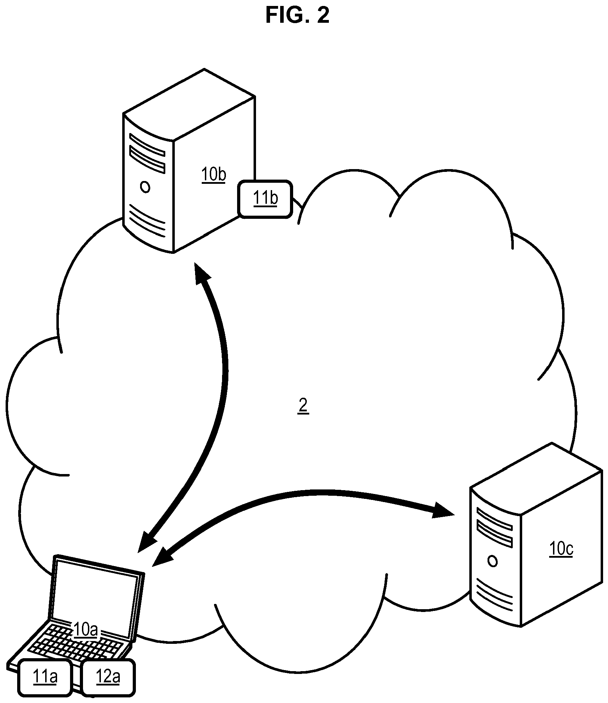

En référence à la **figure 2,** est proposé un procédé de chiffrement ou de déchiffrement « boite blanche » mis en oeuvre au sein d'un équipement 10a tel qu'un terminal mobile (smartphone, tablette tactile, etc.), i.e. un équipement ne disposant pas particulièrement d'un matériel sécurisé et qui peut faire l'objet d'attaques sur implémentation matérielle, et pour lequel l'approche boite blanche prend tout son intérêt.
L'équipement 10a comprend des moyens de traitement de données 11a (un processeur) et des moyens de stockage de données 12a (une mémoire, par exemple flash).
L'équipement 10a est par exemple relié à un serveur 10b par exemple via le réseau internet 20. Il peut être amené à recevoir depuis ce serveur 10b (par exemple celui d'un fournisseur de solutions de sécurité) des tables (qu'on décrira plus loin) contenant des secrets qui vont être stockées dans la mémoire 12a et utilisées pour la mise en oeuvre du présent procédé

L'équipement 10a peut lui-même être connecté à d'autres serveurs 10c de tiers avec lesquels il pourra échanger des données chiffrées au moyen de présent procédé.

*Procédé cryptographique*

Le présent procédé est un procédé cryptographique de « chiffrement ou de déchiffrement », cela signifie qu'il permet selon les cas de chiffrer des données ou d'en déchiffrer. Il est ainsi de type symétrique, ou « à clé secrète ».

On comprendra que le présent procédé est une nouvelle implémentation d'algorithmes connus, tels que DES ou AES qui sont les standards actuels. Plus précisément, il ne propose pas une nouvelle stratégie de chiffrement, mais seulement une nouvelle façon de manipuler les données au sein de l'algorithme qui soit résistante à toutes les attaques matérielles en « boite blanche ».

Selon un schéma classique, il traite les données blocs par bloc, et au sein d'un bloc il manipule des éléments d'une taille plus petite, par exemple 16 éléments d'un octet pour un bloc 128 bits (cas de AES par exemple). Ces éléments sont manipulés $n$ par $n$, avec $n \geq 2$, et avantageusement $n = 2$.

Ainsi le présent procédé chiffre ou déchiffre un n-uplet de données $\{a_i\}_{i \in [\![0,n-1]\!]}$ avec un n-uplet de clés secrètes $\{k_i\}_{i \in [\![0,n-1]\!]}$ prédéterminées. Dans la suite de la description on fera l'hypothèse que $n = 2$ (i.e. on a une paire d'éléments $a_0$, $a_1$ et une paire de clés $k_0$, $k_1$), mais l'homme du métier saura transposer le procédé à d'autres valeurs de n supérieures.

Chaque élément $a_i$ dudit n-uplet de données $\{a_i\}_{i \in [\![0,n-1]\!]}$ est à valeur dans un espace $\{0;1\}^k$ qu'on notera $\mathbb{F}_2^k$ et a avantageusement une taille d'un octet (un « byte » de 8 bits, i.e. $k = 8$), mais on pourra par exemple prendre une taille d'un semioctet (un « nibble » de 4 bits, i.e. $k = 4$) ou encore 6 bits. On prendra l'exemple préféré d'un octet dans la suite de la description.

Pour traiter un bloc complet à partir d'éléments plus petits, il est nécessaire de multiplier les opérations au sein du bloc, et pour cela le présent procédé combine de façon classique l'utilisation d'une fonction non-linéaire de permutation $f$ (étape (a) comme l'on verra), et l'utilisation d'une une fonction linéaire de multiplexage $L$ (étape (b) comme l'on verra), chacune donnée en fonction de l'algorithme cryptographique à implémenter.

La fonction de permutation $f$ est une fonction bijective paramétrée avec une clé secrète $k_i$ qui prend en entrée un élément d'entrée de $\mathbb{F}_2^k$ et génère en sortie un élément de sortie de la même taille (i.e. de $\mathbb{F}_2^k$). Ces fonctions sont bien connues et on pourra en particulier utiliser celle de tout algorithme cryptographique utilisant des permutations, en particulier un algorithme choisi parmi DES et AES (la fonction $f$ est alors par exemple une boite S).

Par fonction de « multiplexage », on entend une fonction prenant en entrée plusieurs éléments de $\mathbb{F}_2^k$ (en particulier $n$) et générant en sortie un seul élément de $\mathbb{F}_2^k$. Ainsi la fonction de multiplexage combine plusieurs éléments de $\mathbb{F}_2^k$. Ces fonctions sont bien connues et on pourra en particulier utiliser la fonction OU exclusif communément utilisée (en particulier dans AES), notée XOR et plus simplement +.

On comprendra que $f$ est non-linéaire et que $L$ est linéaire.

L'algorithme comprend typiquement l'alternance d'un étage d'utilisation de $f$ pour permuter des éléments puis d'un étage d'utilisation de $L$ pour fusionner les données, et ce jusqu'à avoir traité tout le bloc (les données fusionnées sont alors à nouveau permutées, puis fusionnées avec d'autres données, etc.). On comprend ainsi que le présent procédé comprend avantageusement la répétition des étapes (a) et (b) de sorte à chiffrer ou déchiffrer un ensemble de données comprenant celles dudit n-uplet $\{a_i\}_{i \in [\![0,n-1]\!]}$.

Dans la suite de la présent description, on prendra l'exemple illustratif du schéma général $a_0, a_1 \rightarrow z = L(f(a_0 + k_0), f(a_1 + k_1))$ tel qu'on le trouve sur les figures 1a à 1c, mais l'homme du métier aura le transposer à d'autres structures algorithmiques.

A noter que pour des calculs plus complexes que ceux décrits dans les présents exemples, il peut être intéressant d'utiliser une décomposition sous la forme de séquences d'opérations linéaires et de multiplications. Dans ce cas, les idées continuent à s'appliquer en combinaison avec les travaux de Rivain-Prouff (« Provably Secure Higher-Order Masking of AES » CHES 2010) et Ishai-Sahai-Wagner (« Private Circuits: Securing Hardware against Probing Attacks » à CRYPTO 2003).

*Etape de permutation*

Le présent procédé est mis en oeuvre par les moyens de traitement de données 11a de l'équipement 10a.

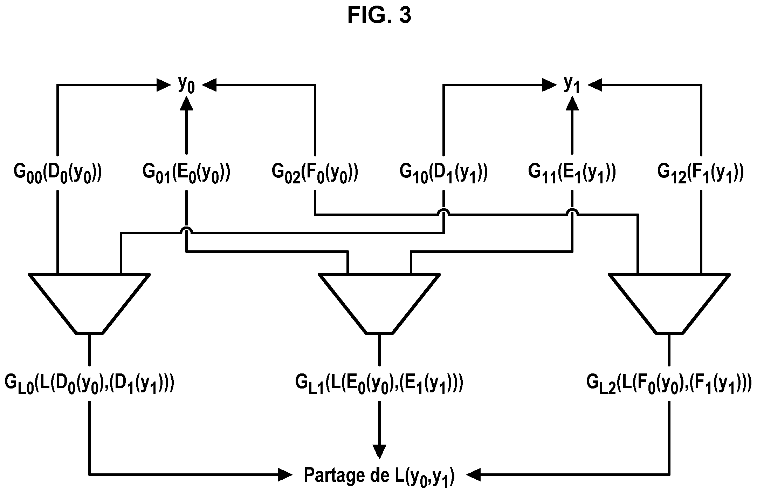

Pour contrer les attaques de l'état de l'art, le présent procédé propose comme représenté sur la **figure 3** de partager tous les états internes du calcul en au moins $m > n$ parties (en particulier $n + 1$ parties), c'est-à-dire au moins 3 parties si $n = 2$ (on prendra l'exemple préféré de 3 parties dans la présente description) et à opérer les calculs sur ces parties de manière indépendante de façon à retrouver un partage du résultat final escompté en toute fin des calculs, avec des fonctions de partage non-linéaires. Ainsi et comme l'on verra plus loin, bien que l'art antérieur peut dissuader l'utilisation de fonctions de partage, la Demanderesse a découvert que le fait d'en utiliser suffisamment et de les choisir non-linéaires résout astucieusement toutes les failles.

Comme expliqué la première étape (a) est dite de permutation, elle voit l'utilisation de la fonction $f$ mais pas de la fonction $L$.

Dans cette étape (a), pour chaque élément $a_i$ dudit n-uplet de données $\{a_i\}_{i\in[\![0,n-1]\!]}$ (i.e. $\forall i \in [\![0, n$ - $1]\!]$), sont déterminés des « premiers états internes » $\{y_{ij}\}_{j\in[\![0,m-1]\!]}$ (appartenant comme les éléments $a_i$ à $\mathbb{F}_2^k$, et au nombre de $m$) par application audit élément $a_i$ de $m$ « premières opérations ». Les premiers états internes sont visibles dans l'hypothèse de boite blanche et doivent être donc inutilisables pour obtenir de l'information sur les clés secrètes.

Chaque première opération est pour cela :

- représentée par une table $T_{ij}$ stockée sur des moyens de stockage de données 12a de l'équipement 10a (de sorte à protéger l'implantation du schéma et cacher les clés), et
- définie comme la combinaison d'un encodage interne bijectif $G_{ij}$ unique, d'une fonction de partage non-linéaire $D_i$, $E_i$, $F_i$..., et de la fonction non-linéaire de permutation $f$ paramétrée avec la clé secrète $k_i$ correspondante, lesdites fonctions de partage non-linéaires $D_i$, $F_i$, $F_i$... formant $m$ collections $\{(D_i, E_i, F_i \dots)\}_{i\in[\![0,n-1]\!]}$ telle que les $n$ fonctions d'une collection partagent toute donnée d'entrée en $n$ fragments dont la somme est égale à la donnée d'entrée.

On a donc typiquement :

$$y_{i0} = T_{i0}[a_i] = G_{i0} \circ D_i \circ f(a_i + k_i) = G_{i0} \circ D_i(y_i),$$

$$y_{i1} = T_{i1}[a_i] = G_{i1} \circ E_i \circ f(a_i + k_i) = G_{i1} \circ E_i(y_1),$$

$$y_{i2} = T_{i2}[a_i] = G_{i2} \circ F_i \circ f(a_i + k_i) = G_{i2} \circ F_i(y_i),$$

etc.

Plus précisément, l'idée de partage non-linéaire est de construire des fonctions $D_i$, $E_i$, $F_i$ ... telles que $\forall i \in [\![0, n$ - $1]\!]$, $\forall x, x = D_i(x) + E_i(x) + F_i(x) + \cdots$. On prendra l'hypothèse que $m = 3$, c'est-à-dire que trois familles $D_i$, $E_i$, $F_i$ suffisent, et donc 6 fonctions si $n = 2$. Les $G_{ij}$ servent à l'encodage interne tandis que les $D_i$, $E_i$ et $F_i$ servent au partage de secret.

Ainsi, chaque valeur interne « non masquée » $y_i = f(a_i + k_i)$, qui est une donnée sensible, peut être reconstruite uniquement à partir de $D_i(y_i)$, $F_i(y_i)$ et $F_i(y_i)$.

$E_i$ et $F_i$ peuvent ainsi être choisies aléatoirement parmi toutes les fonctions (non nécessairement bijectives) opérant sur des éléments de la taille souhaitée, en particulier des octets, mais pas $D_i$, qui est liée aux autres.

Le procédé comprend ainsi préférentiellement une étape préalable (a0) de génération aléatoire par les moyens de traitement de données 11b d'un serveur 10b connecté à l'équipement 10a des $m$ - 1 fonctions de partage non-linéaires $E_i$, $F_i$... pour chaque collection ($D_i$, $E_i$, $F_i$ ...), à partir desquelles la $m$-ième fonction de partage non-linéaire $D_i$ est construite (en posant par exemple $D_i(y) = y_i + E_i(y) + F_i(y) + ...$ pour tout élément $y$). Tous les $G_{ij}$ sont comme expliqués des encodages bijectifs (de $\mathbb{F}_2^k$ *dans* $\mathbb{F}_2^{k\prime}$ de masquage, choisis aléatoirement une fois pour toute, en particulier par le serveur 10b.

Ainsi, de façon préférée, l'étape (a0) comprend en outre la génération aléatoire des encodages internes $G_{ij}$ (et comme l'on va voir $C_{Lj}$), la construction des tables $T_{ij}$, (et comme l'on va voir $T_{Lj}$), et leur transmission à l'équipement 10a pour stockage sur les moyens de stockage 12a. Dans le mode de réalisation préféré on a $m \times n$ premiers encodages internes $G_{ij}$ et leurs inverses, et m deuxièmes encodages internes $G_{Lj}$ et leurs inverses. Au total, $(m - 1) + (m \times n) + m = (n + 2)m - 1$ fonctions de $\mathbb{F}_2^k$ dans $\mathbb{F}_2^k$ doivent être générées aléatoirement.

A l'issue de l'étape (a) (lorsqu'elle a été mise en oeuvre $n$ fois pour tous les $a_i$), on dispose d'un ensemble (en l'espèce $m \times n$) desdits premiers états internes $y_{ij}$. On peut ainsi former $m$ n-uplets de premiers états internes

$$\left\{ \left\{ y_{ij} \right\}_{i \in [\![0,n-1]\!]} \right\}_{j \in [\![0,m-1]\!]} .$$

*Etape de multiplexage*

La deuxième étape (b) est dite de multiplexage, elle voit l'utilisation de fonction $L$ pour combiner les premiers états internes $y_{ij}$.

Dans cette étape (b), pour chaque n-uplet de premiers états internes $\left\{ y_{ij} \right\}_{i \in [\![0,n-1]\!]}$ (i.e. $\forall j \in [\![0, m - 1]\!]$) est déterminé un (unique) « deuxième état interne » $z_j$ (toujours dans $\mathbb{F}_2^k$) par application auxdits états internes $y_{ij}$ du n-uplet de premiers états internes $\left\{ y_{ij} \right\}_{i \in [\![0,n-1]\!]}$ d'une « deuxième opération ».

Comme auparavant, les deuxièmes états internes sont visibles dans l'hypothèse de boite blanche et doivent être donc inutilisables pour obtenir de l'information sur les premiers états internes et les clés secrètes. Chaque deuxième opération est pour cela :

- représentée par une table $T_{Lj}$ stockée sur les moyens de stockage de données 12a de l'équipement 10a (à nouveau de sorte à protéger l'implantation du schéma), et
- définie comme la combinaison d'un deuxième encodage interne bijectif $G_{Lj}$ unique, de la fonction linéaire de multiplexage $L,$ et des inverses desdits premiers encodages internes bijectifs $G_{ij}$.

On a donc typiquement:

$$z_j = T_{Lj}\left[ y_{0j}, y_{1j} \ldots \right] = G_{Lj} \circ L\left( G_{0j}^{-1}\left[ y_{0j} \right], G_{1j}^{-1}\left[ y_{1j} \right] \ldots \right).$$

On vient ainsi combiner $n$ par $n,$ de façon croisée comme l'on voit sur la figure 3, les premiers états internes de sorte à ce que la valeur non masquée de $z = T_L[y_0, y_1, ...]$ qui est une autre donnée sensible, peut être à nouveau reconstruite à partir de tous les $D_i(y_i)$, $E_i(y_i)$ et $F_i(y_i)$. Les $G_{Lj}$ servent encore à l'encodage interne tandis que les $D_i$, $E_i$ et $F_i$ servent au partage de secret.

*Explication*

On peut alors aisément retrouver le chiffré/déchiffré z dudit n-uplet de données $\left\{ a_i \right\}_{i \in [\![0,n-1]\!]}$ à partir des $m$ deuxièmes états internes $\left\{ z_j \right\}_{j \in [\![0,m-1]\!]}$.

Il suffit de leur appliquer si l'on souhaite dans une étape (c) une « troisième opération » qui est :

- représentée par une table $T_z$ stockée sur les moyens de stockage de données 12a de l'équipement 10a, et
- définie comme la somme des inverses desdits deuxièmes encodages internes bijectifs $G_{Lj}$.

On a donc typiquement : $z = T_z\left[ \left\{ z_j \right\}_{j \in [\![0,m-1]\!]} \right] = \sum_{j=0}^{m-1} G_{Lj}^{-1}\left[ z_j \right].$

Or, comme $n < m$, chaque $z_j$ ne contient pas assez d'information pour reconstruire obtenir une relation liant les $y_i$, une attaque par collision devient donc impossible.

Pour illustrer cela dans le cas n = 2 et m = 3, pour toute paire d'octets $(a, b)$, on a $\forall j \in \{0; 1; 2\}$,

$$T_{Lj}(a,b) = G_{Lj}\left(L(G_{0j}^{-1}(a), G_{1j}^{-1}(b))\right),$$ c'est-à-dire $$T_{L0}(a,b) = G_{L0}\left(L(G_{00}^{-1}(a), G_{10}^{-1}(b))\right),$$

$$T_{L1}(a,b) = G_{L1}\left(L(G_{01}^{-1}(a), G_{11}^{-1}(b))\right) \text{ et } T_{L2}(a,b) = G_{L2}\left(L(G_{02}^{-1}(a), G_{12}^{-1}(b))\right).$$

On peut vérifier que par linéarité de L et par construction, on a

$$T_{L0}(T_{00}[a_0], T_{10}[a_1]) = G_{L0}\left(L(G_{00}^{-1}(G_{00}oD_0[y_0]), G_{10}^{-1}(G_{10}oD_1[y_1]))\right) = $$
$$G_{L0}\left(L(D_0[y_0], D_1[y_1])\right);$$

$$T_{L1}(T_{01}[a_0], T_{11}[a_1]) = G_{L1}\left(L(G_{01}^{-1}(G_{01}oE_0[y_0]), G_{11}^{-1}(G_{11}oE_1[y_1]))\right) = $$
$$G_{L1}\left(L(E_0[y_0], E_1[y_1])\right);$$

$$T_{L2}(T_{02}[a_0], T_{12}[a_1]) = G_{L2}\left(L(G_{02}^{-1}(G_{02}oF_0[y_0]), G_{12}^{-1}(G_{12}oF_1[y_1]))\right) = $$
$$G_{L2}\left(L(F_0[y_0], F_1[y_1])\right);$$

C'est-à-dire que $\forall j \in (0; 1; 2\}$, $T_{Lj}(T_{0j}[a_0], T_{1j}[a_1]) = G_{Lj}(L(G_{0j}^{-1}[y_{0j}], G_{1j}^{-1}[y_{1j}]))$. On en déduit que les $G_{Lj}$ pour $j$ = 0,1,2 forment un encodage d'un partage de la donnée $T_L[y_0, y_1]$ décrite dans la figure 1c.

Et

$$z = G_{L0}^{-1}[z_0] + G_{L1}^{-1}[z_1] + G_{L2}^{-1}[z_2] = G_{L0}^{-1}oG_{L0}\left(L(D_0[y_0], D_1[y_1])\right) + $$
$$G_{L1}^{-1}oG_{L1}\left(L(E_0[y_0], E_1[y_1])\right) + G_{L2}^{-1}oG_{L2}\left(L(F_0[y_0], F_1[y_1])\right) = $$
$$L(D_0[a_0], D_1[a_1]) + L(E_0[y_0], E_1[y_1]) + L(F_0[y_0], F_1[y_1]) = L(D_0[y_0] + E_0[y_0] + $$
$$F_0[y_0], D_1[y_1] + E_1[y_1] + F_1[y_1]) = L(y_0, y_1) = L(f(x_0 + k_0), f(y_0 + k_1)).$$

Le présent découpage permet donc sans difficulté d'atteindre son objectif, à savoir permettre le chiffrement ou le déchiffrement d'éléments, tout en obtenant uniquement des états internes inexploitables pour retrouver les clés secrètes.

*Produit programme d'ordinateur*

Selon un deuxième et un troisième aspects, l'invention concerne un produit programme d'ordinateur comprenant des instructions de code pour l'exécution (en particulier sur les moyens de traitement de données 11a de l'équipement 10a) d'un procédé selon le premier aspect de l'invention de chiffrement ou de déchiffrement d'un n-uplet de données $\{a_i\}_{i\in[\![0,n-1]\!]}$ avec un n-uplet de clés secrètes $\{k_i\}_{i\in[\![0,n-1]\!]}$ prédéterminées, ainsi que des moyens de stockage lisibles par un équipement informatique (une mémoire 12a de l'équipement 10a) sur lequel on trouve ce produit programme d'ordinateur.

**Revendications**

1. Procédé de chiffrement ou de déchiffrement d'un n-uplet de données $\left(\{a_i\}_{i\in[\![0,n-1]\!]}\right)$ avec un n-uplet de clés secrètes $\left(\{k_i\}_{i\in[\![0,n-1]\!]}\right)$ prédéterminées, $n \geq 2$, pour une fonction non-linéaire de permutation (*f*) et une fonction linéaire de multiplexage (*L*) données, le procédé étant **caractérisé en ce qu'**il comprend la mise en oeuvre par des moyens de traitement de données (11a) d'un équipement (10a) d'étapes de :

(c) Pour chaque élément ($\alpha_i$) dudit n-uplet de données $\left(\{a_i\}_{i \in [\![0,n-1]\!]}\right)$, détermination de *m* > *n* premiers états internes $\left(\{y_{ij}\}_{j \in [\![0,m-1]\!]}\right)$ par application audit élément (*a*$_i$) de m premières opérations, chacune étant :

- représentée par une table (*T$_{ij}$*) stockée sur des moyens de stockage de données (12a) de l'équipement (10a), et
- définie comme la combinaison d'un encodage interne bijectif (*G$_{ij}$*) unique, d'une fonction de partage non-linéaire (*D$_i$,E$_i$,F$_i$...*), et de la fonction non-linéaire de permutation (*f*) paramétrée avec la clé secrète (*k$_i$*) correspondante, lesdites fonctions de partage non-linéaires (*D$_i$,E$_i$,F$_i$...*) formant *m* collections $\left(\{(D_i, E_i, F_i \ldots)\}_{i \in [\![0,n-1]\!]}\right)$ telle que les *n* fonctions d'une collection partagent toute donnée d'entrée en *n* fragments dont la somme est égale à la donnée d'entrée ;

l'ensemble desdits premiers états internes *y$_{ij}$* déterminés pour tous lesdits éléments (*a$_i$*) formant *m* n-uplets d'états internes $\left(\left\{\{y_{ij}\}_{i \in [\![0,n-1]\!]}\right\}_{j \in [\![0,m-1]\!]}\right)$ ;

(d) Pour chaque n-uplet de premiers états internes $\left(\{y_{ij}\}_{i \in [\![0,n-1]\!]}\right)$, détermination d'un deuxième état interne (*z$_j$*) par application auxdits états internes (*y$_{ij}$*) du n-uplet de premiers états internes $\left(\{y_{ij}\}_{i \in [\![0,n-1]\!]}\right)$ d'une deuxième opération étant :

- représentée par une table (*T$_{Lj}$*) stockée sur les moyens de stockage de données (12a) de l'équipement (10a), et
- définie comme la combinaison d'un deuxième encodage interne bijectif (*G$_{Lj}$*) unique, de la fonction linéaire de multiplexage (*L*), et des inverses desdits premiers encodages internes bijectifs (*G$_{ij}$*).

2. Procédé selon la revendication 1, dans lequel $\forall i \in [\![0,n-1]\!]$, $y_{i0} = T_{i0}[a_i] = G_{i0} \circ D_i \circ f(a_i + k_i)$, $y_{i1} = T_{i1}[a_i] = G_{i1} \circ E_i \circ f(a_i + k_i)$, $y_{i2} = T_{i2}[a_i] = G_{i2} \circ F_i \circ f(a_i + k_i)$, etc.

3. Procédé selon la revendication 2, dans lequel $z_j = T_{Lj}[y_{0j},y_{1j} \ldots] = G_{Lj} \circ L(G_{0j}^{-1}[y_{0j}], G_{1j}^{-1}[y_{1j}]\ldots)$.

4. Procédé selon l'une des revendications 1 à 3, dans lequel $\forall i \in [\![0, n-1]\!]$, $\forall x$, $x = D_i(x) + E_i(x) + F_i(x) + \cdots$.

5. Procédé selon la revendication 4, comprenant une étape préalable (a0) de génération aléatoire par des moyens de traitement de données (11b) d'un serveur (10b) connecté à l'équipement (1a) de *m* - 1 fonctions de partage non-linéaires (*E$_i$, F$_i$...*) pour chaque collection (*D$_i$,E$_i$,F$_i$...*), à partir desquelles la m-ième fonction de partage non-linéaire (*D$_i$*) est construite.

6. Procédé selon la revendication 5, dans lequel l'étape (a0) comprend en outre la génération aléatoire des encodages internes (*G$_{ij}$,G$_{Lj}$*), la construction des tables (*T$_{ij}$,T$_{Lj}$*), et leur transmission à l'équipement (10a) pour stockage sur les moyens de stockage (12a).

7. Procédé selon l'une des revendications 1 à 6, comprenant la répétition des étapes (a) et (b) de sorte à chiffrer ou déchiffrer un ensemble de données comprenant celles dudit n-uplet $\left(\{a_i\}_{i \in [\![0,n-1]\!]}\right)$.

8. Procédé selon l'une des revendications 1 à 7, comprenant en outre une étape (c) de détermination du chiffré/déchiffré

(z) dudit n-uplet de données $\left(\{a_i\}_{i\in[\![0,n-1]\!]}\right)$ par application auxdits deuxièmes états internes $\left(\{z_j\}_{j\in[\![0,m-1]\!]}\right)$ d'une troisième opération étant :

- représentée par une table ($T_z$) stockée sur les moyens de stockage de données (12a) de l'équipement (10a), et
- définie comme la somme des inverses desdits deuxièmes encodages internes bijectifs ($G_{Lj}$).

9. Procédé selon la revendication 8, dans lequel z = $T_z\left[\{z_j\}_{j\in[\![0,m-1]\!]}\right] = \sum_{j=0}^{m-1} G_{Lj}^{-1}[z_j].$

10. Procédé selon l'une des revendication 1 à 9, dans lequel $n$ = 2.

11. Procédé selon la revendication 10, dans lequel ladite fonction linéaire de multiplexage ($L$) est la fonction OU exclusif.

12. Procédé selon l'une des revendications 1 à 11, dans lequel $m$ = 3.

13. Procédé selon l'une des revendications 1 à 12, dans lequel chaque élément ($a_i$) dudit n-uplet de données $\left(\{a_i\}_{i\in[\![0,n-1]\!]}\right)$ a une taille d'un octet ou d'un semioctet.

14. Procédé selon l'une des revendications 1 à 13, dans lequel ladite fonction non-linéaire de permutation ($f$) est celle d'un algorithme cryptographique choisi parmi DES et AES.

15. Produit programme d'ordinateur comprenant des instructions de code pour l'exécution d'un procédé selon l'une des revendications 1 à 14 de chiffrement ou de déchiffrement d'un n-uplet de données $\left(\{a_i\}_{i\in[\![0,n-1]\!]}\right)$ avec un n-uplet de clés secrètes $\left(\{k_i\}_{i\in[\![0,n-1]\!]}\right)$ prédéterminées.

16. Moyen de stockage lisible par un équipement informatique sur lequel un produit programme d'ordinateur comprend des instructions de code pour l'exécution d'un procédé selon l'une des revendications 1 à 14 de de chiffrement ou de déchiffrement d'un n-uplet de données $\left(\{a_i\}_{i\in[\![0,n-1]\!]}\right)$ avec un n-uplet de clés secrètes $\left(\{k_i\}_{i\in[\![0,n-1]\!]}\right)$ prédéterminées.

**Patentansprüche**

1. Verfahren zum Verschlüsseln oder Entschlüsseln eines Daten-Tupels $\left(\{a_i\}_{i\in[\![0,n-1]\!]}\right)$ mit einem Tupel vorbestimmter geheimer Schlüssel $\left(\{k_i\}_{i\in[\![0,n-1]\!]}\right)$, $n \geq 2$, für eine nichtlineare Permutationsfunktion ($f$) und eine lineare Datenmultiplexfunktion ($L$), wobei das Verfahren **dadurch gekennzeichnet ist, dass** es die Implementierung einer Ausrüstung (10a) mit folgenden Schritten durch Datenverarbeitungsmittel (11a) umfasst:

(c) Für jedes Element ($a_i$) des Daten-Tupels $\left(\{a_i\}_{i\in[\![0,n-1]\!]}\right)$ Bestimmung von $m > n$ ersten internen Zuständen $\left(\{y_{ij}\}_{j\in[\![0,m-1]\!]}\right)$ durch Anwenden von $m$ ersten Operationen auf das Element ($a_i$), wobei jede von ihnen:

- durch eine Tabelle dargestellt ist ($T_{ij}$), die in Datenspeichermitteln (12a) der Ausrüstung (10a) gespeichert ist, und

- als die Kombination einer einzelnen bijektiven internen Codierung ($G_{ij}$) einer nichtlinearen Teilungsfunktion ($D_i, E_i, F_i$ ...) und der nichtlinearen Permutationsfunktion ($f$) definiert ist, die mit dem entsprechenden geheimen Schlüssel ($k_i$) parametriert ist, wobei die nichtlinearen Teilungsfunktionen ($D_i, E_i, F_i$...) $m$ Sammlungen

bilden $\left(\{(D_i, E_i, F_i \ldots)\}_{i \in [\![0,n-1]\!]}\right)$, sodass die *n* Funktionen einer Sammlung alle Eingangsdaten in *n* Fragmente teilen, deren Summe gleich den Eingangsdaten ist;

wobei alle ersten internen Zustände, $y_{ij}$, die für alle Elemente ($a_i$) bestimmt sind, *m* Tupels zu internen Zuständen

$$\left(\left\{\{y_{ij}\}_{i \in [\![0,n-1]\!]}\right\}_{j \in [\![0,m-1]\!]}\right)$$ bilden;

(d) Für jedes Tupel zu ersten internen Zuständen $\left(\{y_{ij}\}_{i \in [\![0,n-1]\!]}\right)$ Bestimmung eines zweiten internen Zustands ($z_j$) durch Anwendung des Tupels von ersten internen Zuständen ($y_{ij}$) auf die internen Zustände

$$\left(\{y_{ij}\}_{i \in [\![0,n-1]\!]}\right)$$ einer zweiten Operation, die:

- durch eine Tabelle ($T_{Lj}$) dargestellt ist, die auf den Datenspeichermitteln (12a) der Ausrüstung (10a) gespeichert ist, und
- als die Kombination einer einzelnen zweiten bijektiven internen Codierung ($G_{Lj}$) der linearen Multiplexfunktion ($L$) und der Umkehrungen der ersten bijektiven internen Codierung ($G_{ij}$) definiert ist.

2. Verfahren nach Anspruch 1, wobei $\forall i \in [\![0, n-1]\!]$, $y_{i0} = T_{i0}[a_i] = G_{i0} \circ D_i \circ f(a_i + k_i)$, $y_{i1} = T_{i1}[a_i] = G_{i1} \circ E_i \circ f(a_i + k_i)$, $y_{i2} = T_{i2}[a_i] = G_{i2} \circ F_i \circ f(a_i + k_i)$, usw.

3. Verfahren nach Anspruch 2, wobei $z_j = T_{Lj}[y_{0j}, y_{1j} \ldots] = G_{Lj} \circ L(G_{0j}^{-1}[y_{0j}], G_{1j}^{-1}[y_{1j}] \ldots)$.

4. Verfahren nach einem beliebigen der vorstehenden Ansprüche 1 bis 3, wobei $\forall i \in [\![0, n-1]\!]$, $\forall x$, $x = D_i(x) + E_i(x) + F_i(x) + \cdots$.

5. Verfahren nach Anspruch 4, umfassend einen Vorschritt (a0) für Zufallserzeugung durch Datenverarbeitungsmittel (11b) eines Servers (10b), der mit der Ausrüstung (1a) von *m*-1 nichtlinearen Teilungsfunktionen ($E_i, F_i \ldots$) für jede Sammlung ($D_i, E_i, F_i \ldots$) verbunden ist, aus denen die m-te nichtlineare Teilungsfunktion ($D_i$) aufgebaut ist.

6. Verfahren nach Anspruch 5, wobei Schritt (a0) ferner das zufällige Erzeugen interner Codierungen ($G_{ij}, G_{Lj}$), den Aufbau von Tabellen ($T_{ij}, T_{Lj}$) und deren Übertragung an die Ausrüstung (10a) zum Speichern auf den Speichermitteln (12a) umfasst.

7. Verfahren nach einem beliebigen der vorstehenden Ansprüche 1 bis 6, umfassend die Wiederholung der Schritte (a) und (b) sodass eine Datengruppe verschlüsselt oder entschlüsselt wird, die diejenigen des Tupels $\left(\{a_i\}_{i \in [\![0,n-1]\!]}\right)$ enthalten.

8. Verfahren nach einem beliebigen der vorstehenden Ansprüche 1 bis 7, ferner umfassend einen Bestimmungsschritt (c) des Ver-/Entschlüsselten (z) des Datentupels $\left(\{a_i\}_{i \in [\![0,n-1]\!]}\right)$ durch Anwendung einer dritten Operation auf die zweiten internen Zustände $\left(\{z_j\}_{j \in [\![0,m-1]\!]}\right)$ einer dritten Operation, die:

- durch eine Tabelle ($T_z$) dargestellt ist, die in den Datenspeichermitteln (12a) der Ausrüstung (10a) gespeichert ist, und
- als die Summe der Umkehrungen der zweiten bijektiven internen Codierungen ($G_{Lj}$) definiert ist.

9. Verfahren nach Anspruch 8, wobei $z = T_z\left[\{z_j\}_{j \in [\![0,m-1]\!]}\right] = \sum_{j=0}^{m-1} G_{Lj}^{-1}[z_j]$.

10. Verfahren nach einem beliebigen der vorstehenden Ansprüche 1 bis 9, wobei *n* = 2.

11. Verfahren nach Anspruch 10, wobei die lineare Multiplexfunktion (*L*) die exklusive ODER-Funktion ist.

12. Verfahren nach einem beliebigen der vorstehenden Ansprüche 1 bis 11, wobei *m* = 3.

13. Verfahren nach einem beliebigen der vorstehenden Ansprüche 1 to 12, wobei jedes Element (*a_i*) des Datentupels $\left(\{a_i\}_{i\in[\![0,n-1]\!]}\right)$ eine Größe eines Byte oder eines halben Byte aufweist.

14. Verfahren nach einem beliebigen der vorstehenden Ansprüche 1 bis 13, wobei die nichtlineare Permutationsfunktion (*f*) diejenige eines aus DES und AES ausgewählten kryptographischen Algorithmus ist.

15. Rechnerprogrammprodukt, umfassend Codeanweisungen zum Ausführen eines Verfahrens nach einem beliebigen der vorstehenden Ansprüche 1 bis 14 zum Verschlüsseln oder Entschlüsseln eines Datentupels $(\{a_i\}_{i\in 0,n-1})$ mit einem Tupel vorbestimmter geheimer Schlüssel $\left(\{k_i\}_{i\in[\![0,n-1]\!]}\right)$.

16. Speichermittel, das von einer Rechnerausrüstung gelesen werden kann, in dem ein Rechnerprogrammprodukt Codeanweisungen zum Ausführen eines Verfahrens nach einem beliebigen der vorstehenden Ansprüche 1 bis 14 und zum Verschlüsseln oder Entschlüsseln eines Daten-Tupels $\left(\{a_i\}_{i\in[\![0,n-1]\!]}\right)$ mit einem Tupel vorbestimmter geheimer Schlüssel $\left(\{k_i\}_{i\in[\![0,n-1]\!]}\right)$ umfasst.

**Claims**

1. A method for encrypting or decrypting a n-tuple of data $\left(\{a_i\}_{i\in[\![0,n-1]\!]}\right)$ with a n-tuple of predetermined secret keys $\left(\{k_i\}_{i\in[\![0,n-1]\!]}\right)$, $n \geq 2$, for a given non-linear permutation function (*f*) and a given linear multiplexing function (*L*), the method being **characterized in that** it comprises data-processing means (11a) of equipment (10a) implementing steps of:

   (c) For each element (*a_i*) of said n-tuple of data $\left(\{a_i\}_{i\in[\![0,n-1]\!]}\right)$, determination of *m > n* first internal states $\left(\{y_{ij}\}_{j\in[\![0,m-1]\!]}\right)$ by application to said element (*a_i*) of *m* first operations, each being:

   - represented by a table (*T_{ij}*) stored on data-storage means (12a) of the equipment (10a), and
   - defined as the combination of a single bijective internal encoding (*G_{ij}*), of a non-linear sharing function (*D_i,E_i,F_i*...), and of the non-linear permutation function (*f*) parameterized with the corresponding secret key (*k_i*), said non-linear sharing functions (*D_i,E_i,F_i*...) forming *m* collections $\left(\{(D_i, E_i, F_i \ldots)\}_{i\in[\![0,n-1]\!]}\right)$ such that the *n* functions of a collection share any input datum in *n* fragments whereof the sum is equal to the input datum;

   all of said first internal states *y_{ij}* determined for all said elements (*a_i*) forming *m* n-tuples of internal states $\left(\left\{\{y_{ij}\}_{i\in[\![0,n-1]\!]}\right\}_{j\in[\![0,m-1]\!]}\right)$;

   (d) For each n-tuple of first internal states $\left(\{y_{ij}\}_{i\in[\![0,n-1]\!]}\right)$, determination of a second internal state (*z_j*) by application to said internal states (*y_{ij}*) of the n-tuple of first internal states $\left(\{y_{ij}\}_{i\in[\![0,n-1]\!]}\right)$ of a second operation being:

- represented by a table ($T_{Lj}$) stored on the data-storage means (12a) of the equipment (10a), and
- defined as the combination of a second single bijective internal encoding ($G_{Lj}$), of the linear multiplexing function ($L$), and of the inverses of said first bijective internal encodings ($G_{ij}$).

2. The method according to claim 1, wherein $\forall i \in [\![0, n-1]\!]$, $y_{i0} = T_{i0}[a_i] = G_{i0} \circ D_i \circ f(a_i + k_i)$, $y_{i1} = T_{i1}[a_i] = G_{i1} \circ E_i \circ f(a_i + k_i)$, $y_{i2} = T_{i2}[a_i] = G_{i2} \circ F_i \circ f(a_i + k_i)$, etc.

3. The method according to claim 2, wherein $z_j = T_{Lj}[y_{0j}, y_{1j} \ldots] = G_{Lj} \circ L(G_{0j}^{-1}[y_{0j}], G_{1j}^{-1}[y_{1j}] \ldots)$.

4. The method according to one of claims 1 to 3, wherein $\forall i \in [\![0, n-1]\!]$, $\forall x$, $x = D_i(x) + E_i(x) + F_i(x) + \cdots$.

5. The method according to claim 4, comprising a previous step (a0) for random generation by data-processing means (11b) of a server (10b) connected to the equipment (1a) of $m-1$ non-linear sharing functions ($E_i, F_i$... for each collection ($D_i, E_i, F_i$...), from which the m-th non-linear sharing function ($D_i$) is built.

6. The method according to claim 5, wherein step (a0) further comprises random generation of internal encodings ($G_{ij}, G_{Lj}$), construction of tables ($T_{ij}, T_{Lj}$), and their transmission to the equipment (10a) for storage on the storage means (12a).

7. The method according to one of claims 1 to 6, comprising the repetition of steps (a) and (b) so as to encrypt or decrypt a set of data comprising those of said n-tuple $\left( \{a_i\}_{i \in [\![0, n-1]\!]} \right)$.

8. The method according to one of claims 1 to 7, further comprising a determination step (c) of the encrypted/decrypted ($z$) of said n-tuple of data $\left( \{a_i\}_{i \in [\![0, n-1]\!]} \right)$ by application to said second internal states $\left( \{z_j\}_{j \in [\![0, m-1]\!]} \right)$ of a third operation being:

   - represented by a table ($T_z$) stored on the data-storage means (12a) of the equipment (10a), and
   - defined as the sum of the inverses of said second bijective internal encodings ($G_{Li}$).

9. The method according to claim 8, wherein $z = T_z\left[ \{z_j\}_{j \in [\![0, m-1]\!]} \right] = \sum_{j=0}^{m-1} G_{Lj}^{-1}[z_j]$.

10. The method according to one of claims 1 to 9, wherein $n = 2$.

11. The method according to claim 10, wherein said linear multiplexing function ($L$) is the exclusive OR function.

12. The method according to one of claims 1 to 11, wherein $m = 3$.

13. The method according to one of claims 1 to 12, wherein each element ($a_i$) of said n-tuple of data $\left( \{a_i\}_{i \in [\![0, n-1]\!]} \right)$ has a size of one byte or of one half-byte.

14. The method according to one of claims 1 to 13, wherein said non-linear permutation function ($f$) is that of a cryptographic algorithm selected from DES and AES.

15. A computer program product comprising code instructions for executing a method according to one of claims 1 to 14 for encryption or decryption of a n-tuple of data $\left( \{a_i\}_{i \in [\![0, n-1]\!]} \right)$ with a n-tuple of predetermined secret keys $\left( \{k_i\}_{i \in [\![0, n-1]\!]} \right)$.

16. A storage means readable by computer equipment on which a computer program product comprises code instructions for executing a method according to one of claims 1 to 14 for encryption or decryption of a n-tuple of data $\left( \{a_i\}_{i \in [\![0, n-1]\!]} \right)$ with a n-tuple of predetermined secret keys $\left( \{k_i\}_{i \in [\![0, n-1]\!]} \right)$.

**FIG. 1a**

$a_0 + k_0$          $a_1 + k_1$

| f |     | f |

L

$L\ (f(a_0 + k_0), f(a_1 + k_1))$

**FIG. 1b**

$a_0$          $a_1$

| $T_0$ |     | $T_1$ |

$T_L$

$T_L\ [y_0, y_1]$

# FIG. 1c

$a_0$             $a_1$

| $G_0 \circ T_0$ | $G_1 \circ T_1$ |

| $G_2 \circ T_L \circ (G_0^{-1}, G_1^{-1})$ |

$G_2 \circ T_L [y_0, y_1] = G_2[z]$

# FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2924677 A
- EP 2922234 A
- EP 2996278 A

- US 20120045050 A, Farrugia
- US 2010299515 A, Michiels

**Littérature non-brevet citée dans la description**

- **CHOW.** *White-Box Cryptography and an AES Implementation*